# EUROPEAN PATENT APPLICATION

(11) **EP 3 017 705 A1**
(43) Date of publication of application: **11.05.2016**
(21) Application number: 14808024.5
(22) Date of filing: 30.06.2014
(51) Int. Cl.: A23K 50/00, A23K 10/40

(54) **PET FOOD AND MANUFACTURING METHOD THEREFOR**

(30) Priority: 01.07.2013 JP 2013138501
(71) Applicant: Unicharm Corporation, Ehime 799-0111 (JP)
(72) Inventor: NAKASE Koichi, Itami-shi Hyogo 664-0831 (JP); KAKU Waka, Itami-shi Hyogo 664-0831 (JP); ARAMAKI Yusuke, Itami-shi Hyogo 664-0831 (JP); YOSHIDA Kotaro, Itami-shi Hyogo 664-0831 (JP)
(74) Representative: Dolleymores
(86) International application number: PCT/JP2014/067435
(87) International publication number: WO 2014/196665

(57) **Abstract**

There is provided a pet food including: one or more kinds of animal oils and fats; one or more kinds of vegetable oils and fats; a core; and a coating layer which covers the core, in which the coating layer includes a vegetable oil and fat layer on the outermost layer and an animal oil and fat layer which is formed between the core and the vegetable oil and fat layer.

## Description

### Technical Field

The present invention relates to pet food and a method of producing the pet food. More specifically, the present inventon relates to pet food in which biting properties of a pet are improved and a method of producing the pet food.

Priority is claimed on Japanese Patent Application No. 2013-138501, filed July 1, 2013, the content of which is incorporated herein by reference.

### Background Art

In recent years, breeding pets have flourished and the existence value of pets in life has increased. Along with this, pet food which is good for pets' health and in which biting properties (palatability) of pets are improved has been required.

As pet food in which the biting properties (palatability) of a pet are improved, pet food in which the addition amount of total oils and fats is in the range of 5.0% by weight to 13.0% by weight with respect to the entirety of the pet food and a method of producing the pet food are disclosed (PTL 1).

### Citation List

### Patent Literature

[PTL 1] Japanese Unexamined Patent Application, First Publication No. 2013-17470

### Summary of Invention

### Technical Problem

When pet food contains animal oils and fats, the palatability of a pet can be improved. However, there is a problem in that an odor peculiar to animal oils and fats is strongly generated from animal oils and fats contained in the pet food. This problem is more significant in pet food which contains animal oils and fats and is highly preferred by a pet.

The present invention has been made in consideration of the above-described problem and an object thereof is to provide pet food which contains animal oils and fats and whose odor peculiar to the animal oils and fats is reduced.

### Solution to Problem

The present inventors found that generation of an odor peculiar to animal oils and fats is decreased by forming a coating layer containing a vegetable oil and fat layer on the surface of food grains of pet food, thereby completing the present invention. In other words, the present invention is as follows.

(1) Pet food including: one or more kinds of animal oils and fats;
   one or more kinds of vegetable oils and fats; a core; and
   a coating layer which covers the core, in which the coating layer includes a vegetable oil and fat layer on the outermost layer and an animal oil and fat layer which is formed between the core and the vegetable oil and fat layer.
(2) The pet food according to (1), in which the content of the vegetable oils and fats is 2.1 % by weight or greater.
(3) The pet food according to (1) or (2), in which the content of the animal fats and oils is in the range of 5.8% by weight to 23.0% by weight.
(4) The pet food according to any one of (1) to (3), in which the total content of the vegetable oils and fats and the animal oils and fats is in the range of 5.5% by weight to 24.8% by weight.
(5) The pet food according to any one of (1) to (4), in which the vegetable oils and fats are non-drying oil.
(6) The pet food according to any one of (1) to (5), in which the vegetable oils and fats are at least one selected from a group consisting of olive oil, cacao oil, palm oil, and palm kernel oil.
(7) The pet food according to any one of (1) to (6), in which the vegetable oils and fats are palm oil.
(8) The pet food according to any one of (1) to (7), in which the animal oils and fats are at least one selected from a group consisting of chicken oil, lard, beef tallow, and milk fats.
(9) The pet food according to any one of (1) to (8), in which the animal oils and fats are beef tallow.
(10) A method of producing pet food including: a process of granulating a mixture of raw ingredients; a process of adding animal oils and fats to the granulated pet food and impregnating the pet food with the animal oils and fats; and a process of adding vegetable oils and fats to the pet food and impregnating the pet food with the vegetable oils and fats after the process of adding the animal oils and fats and impregnating the pet food with the animal oils and fats.
(11) The method of producing pet food according to (10), in which the pet food is impregnated with the animal oils and fats by a vacuum coating method.
(12) The method of producing pet food according to (10) or (11), in which the pet food is impregnated with the vegetable oils and fats by the vacuum coating method.
(13) The method of producing pet food according to any one of (10) to (12), in which dietary fibers are added in the process of granulating the mixture of raw ingredients.

### Advantageous Effects of Invention

According to the pet food of the present invention and a method of producing the pet food of the present invention, it is possible to provide pet food whose odor peculiar to animal oils and fats generated from the pet food is reduced. Accordingly, it is possible to increase the degree of satisfaction of a pet that does not like strong odor peculiar to the animal oils and fats and the owner of the pet.

### Brief Description of Drawings

FIG. 1 is a sectional view schematically illustrating pet food according to an embodiment of the present invention.
FIG. 2A is a view schematically illustrating a process of an embodiment of a vacuum coating method.
FIG. 2B is a view schematically illustrating a process of an embodiment of a vacuum coating method.
FIG. 2C is a view schematically illustrating a process of an embodiment of a vacuum coating method.
FIG. 2D is a view schematically illustrating a process of an embodiment of a vacuum coating method.
FIG. 2E is a view schematically illustrating a process of an embodiment of a vacuum coating method.
FIG. 2F is a view schematically illustrating a process of an embodiment of a vacuum coating method.
FIG. 2G is a view schematically illustrating a process of an embodiment of a vacuum coating method.
FIG. 2H is a view schematically illustrating a process of an embodiment of a vacuum coating method.
FIG. 2I is a view schematically illustrating a process of an embodiment of a vacuum coating method.

### Description of Embodiments

### «Pet food»

Pet food according to an embodiment of the present invention contains one or more kinds of animal oils and fats and one or more kinds of vegetable oils and fats and includes a core and a coating layer which covers the core, in which the coating layer includes a vegetable oil and fat layer on the outermost layer and an animal oil and fat layer which is formed between the core and the vegetable oil and fat layer.

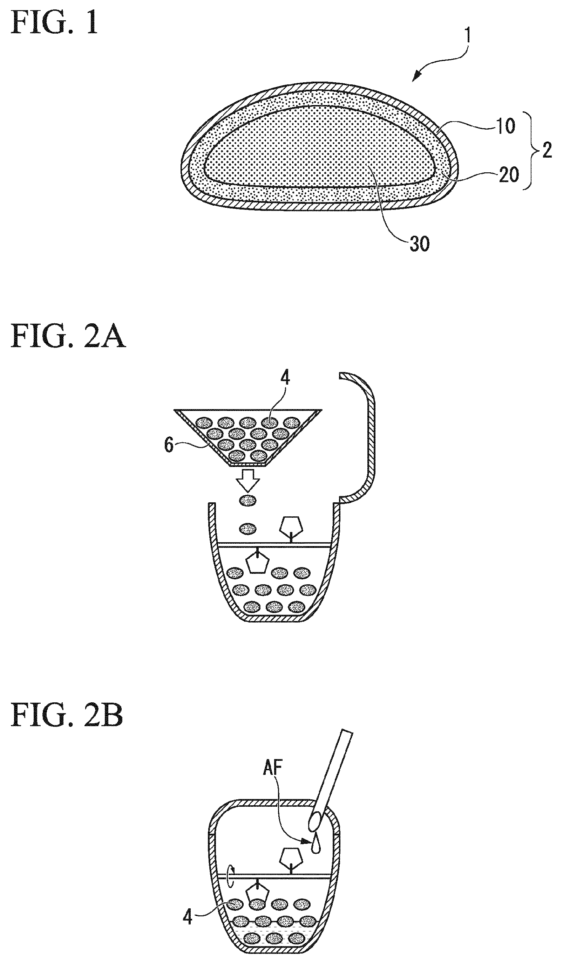

Hereinafter, an embodiment of the present invention will be described with reference to FIG. 1. As illustrated in FIG. 1, pet food 1 includes a core 30 in the inside thereof and a coating layer 2 that covers the core 30. A coating layer 2 includes a vegetable oil and fat layer 10 on the outermost layer and an animal oil and fat layer (inner layer) 20 formed between the core 30 and the vegetable oil and fat layer 10.

The core 30 is formed of food grains described below. It is preferable that the core 30 contains animal oils and fats from a viewpoint of improving the palatability. In the present embodiment, the entire surface of the core 30 is covered with the coating layer 2, but the core may locally include a portion which is not covered with the coating layer.

The coating layer of the pet food of the present embodiment includes a vegetable oil and fat layer on the outermost layer. The vegetable oil and fat layer in the present embodiment uses vegetable oils and fats as main components. In addition, "being used as a main component" means that the components occupy 50% by weight or greater of the total components included in an arbitrary portion of the pet food. As the content to be defined as the main components, 53% by weight or greater of the total components is more preferable and 55% by weight or greater of the total components is still more preferable.

The pet food of the present embodiment is pet food which contains animal oils and fats. In general, in a case where the pet food contains animal oils and fats, there is a problem in that an odor peculiar to the animal oils and fats is generated from the pet food, but, in the pet food of the present embodiment, the coating layer that covers the core includes a vegetable oil and fat layer and thus the odor peculiar to the animal oils and fats generated from the animal oils and fats existing in the core can be reduced. It is considered that the odor can be reduced because the vegetable oil and fat layer becomes a shield so that odor components peculiar to the animal oils and fats which are generated from the animal oils and fats are sealed in the inside of the pet food.

The pet food of the present embodiment includes an animal oil and fat layer that is formed between the core and the vegetable oil and fat layer. The amount of animal oils and fats contained in the entirety of the pet food can be increased by forming the animal oil and fat layer. When the amount of the animal oils and fats is increased, the palatability for pet food can be increased. In the case where the amount of the animal oils and fats contained in the pet food is increased, the odor peculiar to the animal oils and fats is strongly generated occasionally. This problem becomes more significant when the content of the animal oils and fats contained in the animal oil and fat layer exceeds 6.0% by weight with respect to the entirety of the pet food. However, in the pet food of the present embodiment, since a vegetable oil and fat layer is formed on the outside of the animal oil and fat layer, the odor peculiar to the animal oils and fats which is generated from the pet food can be reduced.

Moreover, in the present embodiment, there is a portion in which the animal oil and fat layer 20 and the vegetable oil and fat layer 30 are present in a state of being mixed on the interface of respective layers.

The content ratio of the vegetable oils and fats contained in the pet food of the present embodiment is preferably 2.1 % by weight or greater, more preferably in the range of 2.1% by weight to 12.9% by weight, still more preferably in the range of 3.2% by weight to 10.7% by weight, still more preferably in the range of 3.2% by weight to 8.6% by weight, and particularly preferably in the range of 4.3% by weight to 5.9% by weight with respect to the entirety of the pet food. When the content ratio of the vegetable oils and fats is 2.1 % by weight or greater with respect to the entirety of the pet food, a reduction in the odor of the animal oils and fats, which is an effect of the present embodiment, becomes significant and thus pet food which is highly preferred by a pet can be obtained. When the content of the vegetable oils and fats is less than 2.1% by weight, coating becomes insufficient and thus an effect of reducing the odor of the animal oils and fats contained in the inside of the pet food becomes weak. Further, in a case where the content of the vegetable oils and fats exceeds 12.9% by weight, there is a tendency for a pet to lose interest in eating pet food to be fed every day, which is not preferable.

The content ratio of the animal oils and fats contained in the pet food of the present embodiment is preferably in the range of 5.8% by weight to 23.0% by weight, more preferably in the range of 8.6% by weight to 20.1% by weight, still more preferably in the range of 10.1 % by weight to 17.3% by weight, and particularly preferably in the range of 11.5% by weight to 14.4% by weight with respect to the entirety of the pet food. When the content ratio of the animal oils and fats with respect to the entirety of the pet food is in the range of 5.8% by weight to 23.0% by weight, pet food which is not greasy and is highly preferred by a pet can be obtained. When the content of the animal oils and fats is less than 5.8% by weight, the palatability of a pet for the pet food is decreased, which is not preferable. Further, in a case where the content of the animal oils and fats exceeds 23.0% by weight, there is a concern that the vegetable oils and fats exude on the surface of food grains and stain the hands of a person feeding the pet food, which is not preferable.

The content of the vegetable oils and fats contained in the vegetable oil and fat layer is preferably in the range of 2.5% by weight to 9.0% by weight, more preferably in the range of 3.0% by weight to 7.0% by weight, and still more preferably in the range of 3.5% by weight to 5.5% by weight with respect to the entirety of the pet food.

Further, the content of the animal oils and fats contained in the animal oil and fat layer is preferably in the range of 3.0% by weight to 23.0% by weight, more preferably in the range of 5.0% by weight to 17.0% by weight, and still more preferably in the range of 6.0% by weight to 10.0% by weight with respect to the entirety of the pet food.

The total content of oils and fats contained in the pet food of the present embodiment is preferably in the range of 5.5% by weight to 24.8% by weight, more preferably in the range of 7.9% by weight to 23.0% by weight, still more preferably in the range of 8.3% by weight to 22.0% by weight, and particularly preferably in the range of 13.8% by weight to 19.3% by weight with respect to the entirety of the pet food. It is preferable that the total content of oils and fats is in the above-described range from a viewpoint of realizing the balance between the palatability and the intake of appropriate oils and fats.

The ratio of the content of the animal oils and fats to the content of the vegetable oils and fats in the total content of oils and fats contained in the pet food of the present embodiment is preferably in the range of 5:1 to 1:1, more preferably in the range of 4:1 to 1:1, and still more preferably in the range of 2.5:1 to 1:1. The ratio of the content of the animal oils and fats to the content of the vegetable oils and fats is in the above-described range, since the coating effects of the vegetable oils and fats with respect to the animal oils and fats can be sufficiently obtained, a reduction in odor of the animal oils and fats which is an effect of the present embodiment becomes significant and thus pet food which is highly preferred by a pet can be realized.

The vegetable oils and fats contained in the pet food of the present embodiment are not particularly limited as long as the vegetable oils and fats are edible, but it is preferable that the vegetable oils and fats are non-dry oils. The non-dry oils are oils and fats having an iodine value of 100 or less. The iodine value reflects the degree of oxidation of oils and fats and shows that the oils and fats are less likely to be oxidized when the iodine value is smaller. The oxidized oils and fats are factors of releasing a peculiar odor, worsening the flavor of the pet food, and degrading the quality of the pet food. In addition, the oxidized oils and fats may negatively affect the health of a pet. Meanwhile, since the oils and fats having an iodine value of 100 or less are less likely to be oxidized, when non-dry oils having an iodine value of 100 or less are used, long term storage becomes possible and pet food which has excellent taste and smell and is highly preferred by a pet can be produced.

The vegetable oils and fats may have an iodine value of 100 or less, have a natural fatty acid composition, or may be obtained by changing the fatty acid composition through a fatty acid fractionation treatment or the like.

Examples of the natural vegetable oils and fats having an iodine value of 100 or less include olive oil, cacao oil, palm oil, palm kernel oil, coconut oil, copra oil, and camellia oil. As the oil suitable to be contained in pet food, olive oil, cacao oil, palm oil, or palm kernel oil is preferable in terms of the flavor and oxidation stability and palm oil is more preferable in terms of being widely used as food and being easily used.

The vegetable oils and fats may be used alone or in combination of two or more kinds thereof.

The animal oils and fats contained in the pet food of the present embodiment are not particularly limited as long as the animal oils and fats are edible, but chicken oil, lard, beef tallow (fat), and milk fats are preferable when the palatability of a pet is considered. Among these, beef tallow is more preferable and crude beef tallow is particularly preferable in the beef tallow. Since the crude beef tallow has palatable components derived from cattle, the palatability of a pet for the pet food can be further increased using crude beef tallow. The palatability of a dog or a cat for the pet food can be particularly increased using beef tallow. In addition, chicken oil, lard, beef tallow (fat) and milk fats are oils and fats having an iodine value of 100 or less and excellent oxidation stability, which is particularly preferable from a viewpoint of maintaining the quality of a product.

The above-described animal oils and fats may be used alone or in combination of two or more kinds thereof.

### «Method of producing pet food»

A method of producing pet food of the present embodiment includes a process of granulating a mixture of raw ingredients (granulation process); a process of adding animal oils and fats to the granulated pet food and impregnating the pet food with the animal oils and fats (animal fats and oils addition process); and a process of adding vegetable oils and fats to the pet food and impregnating the pet food with the vegetable oils and fats after the process of adding the animal oils and fats and impregnating the pet food with the animal oils and fats (vegetable oils and fats addition process).

### <Granulation process>

The granulation process is a process of granulating a mixture of raw ingredients to obtain food grains.

As the raw ingredients, ingredients normally used as raw ingredients of the pet food can be used. As important nutrients contained in the raw ingredients, protein and carbohydrates are exemplified.

Examples of the protein include vegetable-derived protein, animal-derived protein, and a mixture of these. Specifically, preferred examples of the vegetable-derived protein include gluten, wheat protein, soybean protein, rice protein, and corn protein. Examples of the animal-derived protein include protein of muscles and organs of cattle, pigs, chickens, and seafood; protein of milk; and a mixture of these. Since raw ingredients containing these proteins may generally contain vitamins, and iron, these are preferable as nutrient sources.

Preferred examples of the carbohydrates include carbohydrates of cereals such as corn, wheat, barley, oats, rice, and soybeans. Since these cereals may contain protein, ash content, minerals, and vitamins in addition to carbohydrates, these are preferable as nutrient sources.

As the raw ingredients, vitamins and minerals, salts, an extract of animal protein, and the like may be added to the above-described mixture in addition to the protein and the carbohydrates.

When the pet food of the present embodiment is produced, a process of adding dietary fibers may be performed in the process of granulating the mixture of raw ingredients. This is because the pet food grains containing dietary fibers easily absorb oils and fats and the food grains do not become sticky.

A mixture of raw ingredients with blending ratios listed in Table 1 can be exemplified.

**[Table 1]**

| | Blending ratio |
|---|---|
| Meat (beef meal, pork meal, and the like) | 15%~45% |
| Cereals (rice flour, wheat flour, corn gluten meal, and the like) | 32%~55% |
| Minerals, amino acids, vitamins, and colorant | 1%~15% |
| Extracts (protein hydrolysate, yeast extract, and the like) | 0.5%~5% |
| Other raw ingredients (oils and fats, egg powder, brewer's yeast, saccharides, and the like) | 0.5%~30% |
| Total | 100% |

The mixture can be obtained by mixing the raw ingredients at a desired blending ratio. As a method of obtaining the mixture, a known method of pulverizing the raw ingredients using a grinder or the like and mixing the raw ingredients can be used.

The method of granulating the mixture is not particularly limited as long as the pet food can be formed into a shape which is suitable for a pet to eat, and an extruder can be preferably used. When an extruder is used, the mixture is pressurized and the hardness of the obtained food grains can be adjusted.

In the present embodiment, the term "granulating" means forming the pet food into a shape which is suitable for a pet to eat. In the present embodiment, the shape of food grains to be formed is not particularly limited as long as the shape is suitable for a pet to eat and any kind of shape such as a spherical shape, a polygonal shape, a cylindrical shape, a donut shape, a plate shape, a go stone shape, a heart shape, a star shape, a fish shape, or a wheel shape can be used. Further, in regard to the size of food grains to be formed, the food grains may be small such that a pet can fit all of it in their mouth or may be large such that a pet can bite into the food plural times.

As the shape of the food grains, a go stone shape whose shortest diameter and longest diameter are both in the range of 3 mm to 30 mm is preferable. When this shape is employed, the degree of impregnation of the food grains with animal oils and fats becomes preferable during the animal oil and fat addition process described below.

Moreover, the shape of the food grains may be a plate shape, a cylindrical shape, or a tube shape which is excessively large for a pet to eat the pet food as it is. In this case, it is preferable that the food grains are made into small pieces such that a pet can easily eat the pet food after the drying treatment process of the subsequent stage is performed.

In the granulation process of the present embodiment, it is preferable that carbohydrates in the mixture are pregelatinized by performing a heating treatment when the mixture is formed and granulated. Through pregelatinization, an effect of improving digestibility of food grains can be obtained.

The heating treatment in the granulation is preformed preferably, for example, at a temperature of 150°C or lower, more preferably in a temperature range of 50°C to 120°C, and still more preferably in a temperature range of 80°C to 100°C. In a case where the grains are heated at this temperature, the time for the heating treatment is preferably in the range of 1 minute to 20 minutes, more preferably in the range of 2 minutes to 20 minutes, and still more preferably in the range of 3 minutes to 6 minutes. When the temperature and the time are higher than or equal to the above-described lower limits of the temperature range and the time range respectively, the above-described effects can be sufficiently obtained. When the temperature is lower than or equal to the above-described upper limit of the temperature range and the time range, it is possible to prevent the raw ingredients from being excessively heated.

In the granulation process, it is preferable that a treatment of drying food grains is carried out. Here, the description is made that the drying treatment is performed during the granulation process, but the drying process may be provided separately from the granulation process.

### <Drying treatment>

As the method of drying the food grains is not particularly limited, known methods such as a method of naturally drying food grains, a method of drying food grains by blowing warm air, a method of drying food grains by reducing the pressure, a method of drying food grains by performing freeze-drying, or a method of performing a fry treatment on food grains in oil can be used. Among these drying methods, a method of drying food grains by blowing warm air is preferable in terms of improving the flavor of the pet food.

The temperature of drying food grains is preferably 100°C or lower, more preferably in the range of 60°C to 90°C, and still more preferably in the range of 70°C to 90°C. In the case where the food grains are dried at this temperature, the time of the heating treatment is preferably in the range of 1 minute to 120 minutes, more preferably in the range of 5 minutes to 60 minutes, and still more preferably in the range of 10 minutes to 30 minutes.

When the temperature and the time are respectively higher than or equal to the above-described lower limit of the temperature range and the time range, it is possible to dry the food grains in a relatively short period of time. When the temperature is lower than or equal to the above-described upper limit of the temperature range, it is possible to prevent the food grains from being extremely heated.

Further, the temperature of the heat treatment may be the same as or different from the temperature of the drying treatment.

The moisture content of the food grains after the drying treatment is carried out is preferably 12.0% by weight or less, more preferably in the range of 3.0% by weight to 10.0% by weight, and still more preferably in the range of 5.0% by weight to 8.0% by weight.

### <Animal oil and fat addition process>

The method of producing pet food of the present embodiment includes a process of granulating a mixture of raw materials; a process of adding animal oils and fats to the granulated pet food and impregnating the pet food with the animal oils and fats; and a process of adding vegetable oils and fats to the pet food and impregnating the pet food with the vegetable oils and fats after the process of adding the animal oils and fats and impregnating the pet food with the animal oils and fats. The animal oils and fats may be added once or plural times.

In the case where the animal oils and fats are added plural times, for example, after the drying treatment is carried out, 1% by weight to 2% by weight of the animal oils and fats are added to the pet food and then the animal oils and fats may be further added thereto. When the animal oils and fats are added immediately after the drying treatment, it is possible to prevent fine powder from being generated (dusting) from the dried food grains during production of pet food.

Further, when the food grains can be impregnated with (contain) the animal oils and fats during the animal oil and fat addition process, a mixture with a meal extract or the like may be added to the animal oils and fats.

The animal oils and fats are not particularly limited as long as oils and fats are derived from animals and suitable for eating, and preferred examples of the animal oils and fats include the above-described animal oils and fats (chicken oil, lard, beef tallow (fat), and milk fats). Among these, beef tallow is more preferable.

Preferred examples of the meal extract include known meal extracts such as a chicken extract (extract derived from chickens) and a fish extract (extract derived from fish).

An animal oil and fat layer can be formed by performing the animal oil and fat addition process.

### <Vegetable oil and fat addition process>

The method of producing pet food of the present embodiment includes a process of granulating a mixture of raw materials; a process of adding animal oils and fats to the granulated pet food and impregnating the pet food with the animal oils and fats; and a process of adding vegetable oils and fats to the pet food and impregnating the pet food with the vegetable oils and fats after the process of adding the animal oils and fats and impregnating the pet food with the animal oils and fats.

The vegetable oils and fats are not particularly limited as long as oils and fats are derived from vegetables and suitable for eating, and preferred examples of the vegetable oils and fats include the above-described vegetable oils and fats (olive oil, cacao oil, palm oil, and palm kernel oil). Among these, palm oil is more preferable.

Further, when the food grains can be impregnated with (contain) the vegetable oils and fats during the vegetable oil and fat addition process, a mixture with other components such as a meal extract and the like may be added to the vegetable oils and fats.

The vegetable oil and fat layer can be formed by performing the process of adding the vegetable oils and fats and impregnating the pet food with the vegetable oils and fats after the animal oils and fats are added to the pet food and the pet food is impregnated with the animal oils and fats. It is possible to suppress leakage of an odor peculiar to the animal oils and fats generated from the inside of the pet food to the outside of the pet food by distributing a large amount of vegetable oils and fats in the surface or the vicinity of the surface of pet food grains.

After the vegetable oil and fat addition process, a process of adding an external additive containing seasonings or the like may be performed as needed. The kind or state of the seasonings or the like is not particularly limited, but seasonings which do not allow the food grains to be bonded to each other through the added external additive are preferable and the state of the external additive is more preferably powdery.

### (Method of adding oils and fats and method of impregnating pet food with oils and fats)

In the method of producing the pet food of the present embodiment, the method of adding oils and fats to the pet food grains is not particularly limited, and conventional methods used to produce pet food or food can be employed.

Examples of a method of bringing oils and fats into contact with pet grains or adhering oils and fats to pet grains include a method of spraying oils and fats onto food grains, a method of putting food grains and oils and fats in a container such as a tank or the like and stirring the mixture using a stirrer or the like, and a method of vibrating the container. Examples of the method of impregnating food grains with oils and fats include a method of naturally impregnating food grains with oils and fats and a vacuum coating method. The vacuum coating method is a method of reducing pressure in a state in which oils and fats are brought into contact with heated food grains or oils and fats are adhered to the heated food grains. When the vacuum coating method is used, it is possible to impregnate not only the surface of the food grains but also the inside of the food grains with oils and fats.

As the method of impregnating the food grains with the animal oils and fats, it is preferable that the impregnation is performed by the vacuum coating method. When the vacuum coating method is used for adding the animal oils and fats, the pet food can be more uniformly impregnated with a larger amount of oils and fats compared to the case of natural impregnation. Further, in the pet food produced through the vegetable oil and fat addition process after the animal oil and fat addition process, a distribution state in which the animal oils and fats are distributed in the inside of the pet food and the vegetable oils and fats are distributed outside thereof is easily realized when the vacuum coating method is used for impregnating the pet food with the animal oils and fats.

Further, as the method of impregnating the food grains with the vegetable oils and fats, it is preferable that the impregnation is performed by the vacuum coating method. In a case where a large amount of oils and fats are adhered to the surface of food grains, the oils and fats are occasionally adhered to the hands of a person feeding the pet food (owner) and stain the hands when the food grains are fed to a pet. Meanwhile, the pet food with which the vegetable oils and fats are impregnated using the vacuum coating method has a small amount of oils and fats on the surface of food grains, the hands of a person feeding the pet food are unlikely to be stained. Moreover, in a case where a large amount of oils and fats are adhered to the surface of food grains, oils and fats or seasonings added to the oils and fats occasionally fall off due to food grains rubbing against each other during the production or after the production or due to contact of food grains with a production facility or the like. Meanwhile, when the inside of the food grains are impregnated with oils and fats using the vacuum coating method, oils and fats on the surface of the food grains are less likely to be separated from the food grains and fall off.

The degree of reducing the pressure is not particularly limited as long as oils and fats can be contained in food grains. The degree thereof may be appropriately adjusted according to the size or the hardness of the food grains, and a reduction of pressure to the range of 0.1 atm to 0.3 atm is exemplified.

Specific examples of adding oils and fats to food grains by the vacuum coating method are described with reference to FIGS. 2A to 2I.

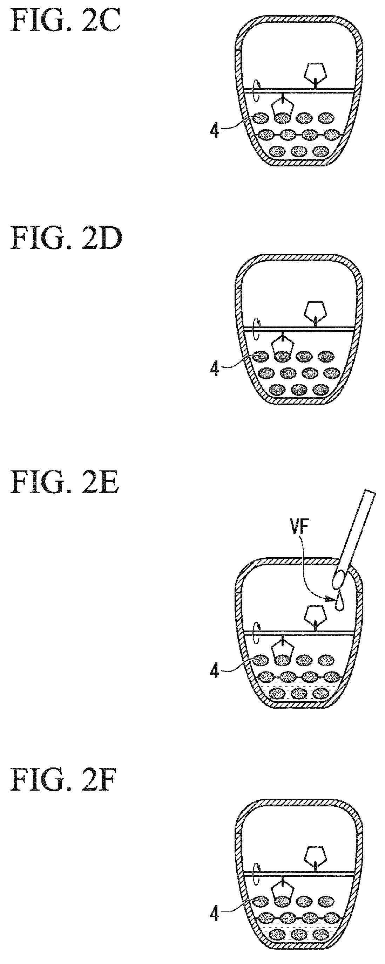

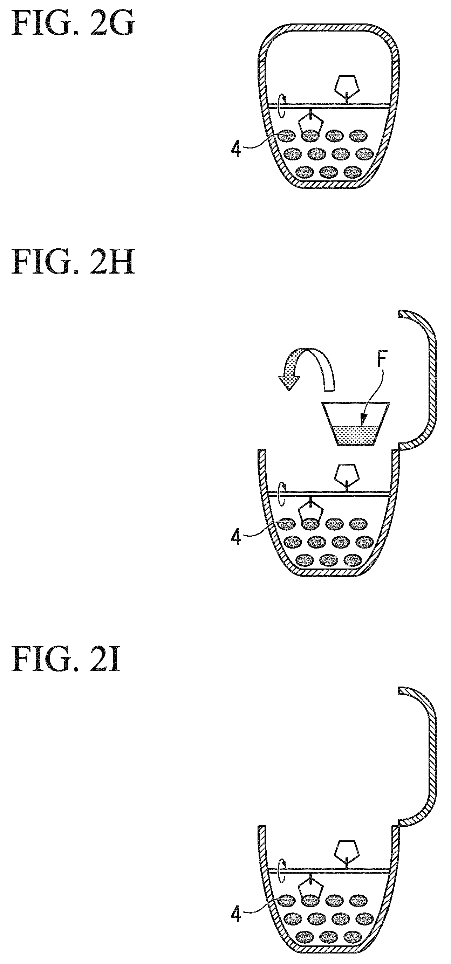

First, food grains 4 are put into a kettle including a stirring pin (FIG. 2A), animal oils and fats (beef tallow) are put into the kettle after sealing, and the temperature thereof is increased to approximately 40°C while the mixture is stirred (FIG. 2B). Next, the pressure inside of the kettle is reduced to approximately 0.2 atm while the mixture is stirred (FIG. 2C), and the mixture is gradually released into air, for example, for 1 minute to 5 minutes and preferably for 1 minute to 3 minutes (FIG. 2D). Further, the addition of the vegetable oils and fats (palm oil) may be performed in the same manner as that of the animal oils and fats (beef tallow) (FIGS. 2E, 2F, and 2G). Next, after seasonings are put into the kettle if necessary and the mixture is stirred for approximately 2 minutes (FIG. 2H), the mixture is transported to a packaging process. The inside of the food grains can be uniformly impregnated with oils and fats by slowly releasing the mixture into air (FIG. 2I).

In regard to increasing the temperature at which the oils and fats are added to the food grains, the main purpose thereof is not to solidify the oils and fats. As long as the purpose can be achieved at the temperature, the increasing of the temperature is not particularly limited. From a viewpoint of preventing oxidation of the oils and fats, a lower temperature is preferable and, for example, the temperature can be adjusted to be in the range of 40°C to 80°C.

The ratio of the oils and fats to be added to the food grains can be appropriately adjusted according to calorie design.

In the present specification and claims, the term "pets" indicates animals that have been bred by people. In a narrower sense, pets are animals being cared for by their owners. Further, the term "pet food" indicates feed for pets. The pet food of the present invention can be sold as "animal feed" or "animal food."

### [Examples]

The present invention will be described in detail with reference to examples, but the present invention is not limited to the examples described below. Hereinafter, "%" indicates "% by weight."

### <Production of pet food> (granulation process)

Raw ingredients (meat, cereals, vitamins and minerals, amino acids, colorants, and other raw ingredients) of food grains were mixed with each other at blending ratios listed in Table 2 and pulverized using a mixer, thereby obtaining raw ingredients at combinations A to E.

**[Table 2]**

| Configuration | Classification | | Blend A (Comparative Example 1) | Blend A (Comparative Example 2 and Example 1) | Blend B | Blend C | Blend E | Blend E + dietary fibers |
|---|---|---|---|---|---|---|---|---|
| | | Beef meal | 33.3% | 30.5% | 34.0% | 0.0% | 34.1% | 34.1% |
| | Meat | Pork meal/beef meal | 0.0% | 0.0% | 0.0% | 12.7% | 0.0% | 0.0% |
| | | Chicken meal | 5.1% | 4.6% | 0.0% | 4.5% | 0.0% | 0.0% |
| | | Rice flour | 0.0% | 0.0% | 30.0% | 0.0% | 10.0% | 9.0% |
| | | Wheat flour | 21.4% | 19.7% | 0.0% | 29.4% | 10.0% | 8.5% |
| | Cereals | Bread crumbs | 15.6% | 14.3% | 0.0% | 17.8% | 10.0% | 8.5% |
| Food grains | | Corn gluten meal | 5.6% | 5.2% | 6.0% | 5.4% | 6.0% | 6.0% |
| | | Other cereals | 0.0% | 0.0% | 0.5% | 0.0% | 0.5% | 0.5% |
| | Extracts | | 6.7% | 6.1% | 10.0% | 9.0% | 10.0% | 10.0% |
| | Minerals, amino acids, vitamins, colorants | | 1.5% | 1.3% | 2.1% | 2.4% | 2.0% | 2.0% |
| | | Egg powder | 2.3% | 2.1% | 0.0% | 1.8% | 0.0% | 0.0% |
| | Other raw ingredients | brewer's yeast saccharides | 0.0% | 0.0% | 1.0% | 0.0% | 1.0% | 1.0% |
| | | | 0.0% | 0.0% | 0.2% | 0.0% | 0.2% | 0.2% |
| | | Dietary fibers (cellulose powder) | 0.0% | 0.0% | 0.0% | 0.0% | 0.0% | 4.0% |
| Oils and fats to be added during oil and fat addition process | Oils and fats | | 5.5% | 13.0% | 13.0% | 13.0% | 13.0% | 13.0% |
| External additives | Seasonings | | 3.2% | 3.2% | 3.2% | 3.9% | 3.2% | 3.2% |
| | Total | | 100% | 100% | 100% | 100% | 100% | 100% |

**[Table 3]**

| Configuration | Classification | | Blend D |
|---|---|---|---|
| Food grains | | Fish meal | 8.9% |
| | Meat | Pork meal/beef meal | 7.0% |
| | | Chicken meal | 5.9% |
| | | Corn | 39.0% |
| | Cereals | Bread crumbs | 8.1% |
| | | Corn gluten meal | 10.5% |
| | Extracts | | 6.0% |
| | Minerals, amino acids, vitamins, colorants | | 1.6% |
| Oils and fats to be added during oil and fat addition process | Oils and fats | | 13.0% |
| Total | | | 100% |

The obtained mixture was granulated so as to obtain food grains in a heart shape with a length of 12 mm, a width of 12 mm, and a thickness of 4 mm using an extruder. At this time, a heat treatment was carried out in a temperature range of 80°C to 100°C for 4 minutes and starch components were pregelatinized.

The obtained food grains were subjected to a drying treatment at approximately 100°C for approximately 90 minutes using a drier and dry food grains having raw ingredients in respective blend s A to D were obtained.

### (Oil and fat addition process)

Blends of raw ingredients of used food grains, the amounts of added beef tallow, the amounts of added palm oil, and an impregnation method of beef tallow and palm oil are listed in Table 4.

**[Table 4]**

| | | | Comparative Example 1 | | Comparative Example 2 | | Example 1 | | | Example 2 | | Example 3 | | | Comparative Example 3 | |
|---|---|---|---|---|---|---|---|---|---|---|---|---|---|---|---|---|
| | | | Blend A | | Blend A | | Blend A | | | Blend B | | Blend B | | | Blend C | |
| Amount of oils and fats to be added | Derived from raw ingredients | Meat (beef meal and the like) | 3.15% | | 3.15% | | 3.15% | | | 3.15% | | 3.15% | | | 3.15% | |
| | | Extracts (chicken extract and the like) | 1.28% | | 1.28% | | 1.28% | | | 1.28% | | 1.28% | | | 1.28% | |
| | | Cereals (corn, soybeans, and the like) | 0.45% | | 0.45% | | 0.45% | | | 0.45% | | 0.45% | | | 0.45% | |
| | Animal oil and fat addition process | Beef tallow (vacuum coating method) | 0.0% | | 6.5% | | 6.5% | | | 6.5% | | 9.0% | | | 13.0% | |
| | | Palm oil (vacuum coating method) | 0.0% | | 6.5% | | 1.0% | | | 1.0% | | 0% | | | 0% | |
| | Vegetable oil and fat addition process | Palm oil (natural impregnation) | 5.5% | | 0.0% | | 5.5% | | | 5.5% | | 4.0% | | | 0.0% | |
| Content of oils and fats | | | Animal | Vegetable | Animal | Vegetable | Animal | Vegetable | | Animal | Vegetable | Animal | Vegetable | | Animal | Vegetable |
| | | | 4.27% | 5.74% | 10.54% | 6.70% | 10.54% | 6.70% | | 10.54% | 6.70% | 12.95% | 4.29% | | 16.81% | 0.43% |
| | Total content of oils and fats | | 10.01% | | 17.24% | | 17.24% | | | 17.24% | | 17.24% | | | 17.24% | |
| | Animal oil and fat layer | | 0.0% | | 6.3% | | 6.3% | | | 6.3% | | 8.7% | | | 12.5% | |
| | Vegetable oil and fat layer | | 5.3% | | 0.0% | | 5.3% | | | 5.3% | | 3.9% | | | 0.0% | |
| Evaluation | Results of evaluation of palatability | (relative value) | 100 | | 119 | | 156 | | | 131 | | 159 | | | 91 | |
| | Odor of animal oils and fats | | A | | B | | A | | | A | | A | | | B | |

### [Examples 1 and 2]

A mixture of beef tallow (crude beef tallow, manufactured by Shikoku Yushi K. K.) and palm oil was adjusted to have the amount listed in Table 4 and was added to food grains obtained in the granulation process (animal oil and fat addition process). As the impregnation method of the mixture of beef tallow and palm oil, a vacuum coating method was used. Next, palm oil (refined palm oil T, manufactured by FUJI OIL CO., LTD.) in the amount listed in Table 4 was added to food grains with which beef tallow and palm oil were impregnated (vegetable oil and fat addition process). The impregnation of palm oil was natural impregnation. Subsequently, an external additive containing seasonings was added to the food grains impregnated with beef tallow and palm oil in order at the ratio listed in Table 2 and was adhered to the outer surface of the food grains, thereby obtaining pet food of Examples 1 and 2.

### [Example 3]

Beef tallow (crude beef tallow, manufactured by Shikoku Yushi K. K.) in the amount listed in Table 4 was added to food grains obtained in the granulation process (animal oil and fat addition process). As the impregnation method of beef tallow, a vacuum coating method was used. Next, palm oil (refined palm oil T, manufactured by FUJI OIL CO., LTD.) in the amount listed in Table 4 was added to food grains with which beef tallow was impregnated (vegetable oil and fat addition process). The impregnation of palm oil uses a natural impregnation method. Subsequently, an external additive containing seasonings was added to the food grains impregnated with beef tallow and palm oil in order at the ratio listed in Table 2 and was adhered to the outer surface of the food grains, thereby obtaining pet food of Example 3.

### [Comparative Example 1]

Pet food was produced in the same manner as in Example 1 except that a mixture of beef tallow and palm oil was not added (animal oil and fat addition process). Palm oil was added to the food grain obtained in the granulation process at the ratio listed in Table 4 and the food grains were naturally impregnated with palm oil, thereby obtaining pet food of Comparative Example 1.

### [Comparative Example 2]

Beef tallow and palm oil were added to the food grains obtained in the granulation process at the ratio listed in Table 4 (animal oil and fat addition process) and the food grains were impregnated with beef tallow and palm oil by the vacuum coating method. Next, pet food was produced in the same manner as in Example 1 except that palm oil was not added to food grains (vegetable oil and fat addition process), thereby obtaining pet food of Comparative Example 2.

### [Comparative Example 3]

Beef tallow was added to the food grains obtained in the granulation process at the ratio listed in Table 4 (animal oil and fat addition process) and the food grains were impregnated with beef tallow by the vacuum coating method. Next, pet food was produced in the same manner as in Example 1 except that palm oil was not added to food grains (vegetable oil and fat addition process), thereby obtaining pet food of Comparative Example 3.

### <Measuring amount of oils and fats>

The content of oils and fats of the pet food in Example 3 was measured by an acid decomposition diethyl ether extraction method described below.

### (Acid decomposition diethyl ether extraction method)

2 g of an analysis sample is precisely weighed and put into a 100 mL beaker, and 2 mL of ethanol is added thereto. The mixture is mixed with a glass rod, so as to moisturize the sample, 20 mL of 28% hydrochloric acid is added thereto to be covered with a watch glass. The mixture is occasionally stirred in a water bath whose temperature is in the range of 70°C to 80°C and heated for 1 hour and then left to be cooled.

The contents in the above-described beaker are put in a 200 mL separatory funnel A, and the beaker is sequentially washed with 10 mL of ethanol and 25 mL of diethyl ether. The washing liquids are put together in the separatory funnel A.

Further, 75 mL of diethyl ether is added to the separatory funnel A and shaken and mixed with each other, and the separatory funnel A is allowed to stand. A diethyl ether layer (upper layer) is collected using a pipette or the like and added to a 300 mL separatory funnel B having 20 mL of water added in advance.

50 mL of diethyl ether is added to the separatory funnel A, and the same operation is performed twice. Each of the diethyl ether layers are collected with a pipette or the like, and the layers are put together in the separatory funnel B.

The separatory funnel B is shaken and mixed and then allowed to stand, and a water layer (lower layer) is disposed. Further, 20 mL of water is added to the separatory funnel B and the same operation is performed twice. The diethyl ether layer is filtered into a fat weighing bottle or a 300 mL eggplant-shaped flask through a funnel whose inside is filled with absorbent cotton and to which an appropriate amount of 10 g or more of sodium sulfate (anhydrous) is added. The fat weighing bottle or the eggplant-shaped flask are dried in a temperature range of 95°C to 100°C in advance, are left to be cooled in a desiccator, and the weight thereof is exactly weighed and then used.

Next, using a Soxhlet extractor in a case where a fat weighing bottle is used, and a rotary evaporator in a case where an eggplant-shaped flask is used, the filtered diethyl ether is recovered. The recovered diethyl ether is volatilized, dried in the temperature range of 95°C to 100°C for 3 hours, and left to be cooled in a desiccator. Next, the weight thereof is precisely weighed and the crude fat content in the sample is calculated.

The content of oils and fats of the pet food of Example 3 which was measured by the above-described method was 17.24%. Based on this result, the contents of oils and fats contained in the pet food of Examples 1 and 2 and Comparative Examples 1 and 2 were estimated. The results are listed in Table 3. In addition, the amounts of oils and fats of the pet food of respective Examples and respective Comparative Examples described below were calculated in the same manner described above.

### <Evaluation of odor>

Odors peculiar to animal oils and fats of the obtained pet food of Examples 1 to 3 and Comparative Examples 2 and 3 were evaluated. A case where an odor peculiar to animal oils and fats was strongly felt was evaluated as B and a case where an odor peculiar to animal oils and fats was not felt was evaluated as A. The evaluation results are listed in Table 4.

In the pet food of Examples 1 to 3, to which palm oil was added after the process of adding beef tallow, the odor peculiar to animal oils and fats was reduced and the smell of the pet food was good as compared to the pet food of Comparative Examples 1 to 3, to which palm oil was not added after the process of adding beef tallow. Further, although the pet food of Example 3 had beef tallow added in an amount as large as 9.0% by weight, the odor peculiar to animal oils and fats was reduced by addition of palm oil, and pet food which smelled good was obtained regardless of the large amount of beef tallow.

### <Evaluation of palatability>

The palatability (biting properties) of the pet food of Examples 1 to 3 and Comparative Examples 1 to 3 was evaluated according to the following method.

A conventional commercially available pet food, which was referred to as pet food A, and was used as an object for comparison with the pet food of Examples 1 to 3 and Comparative Examples 1 to 3. A total of six sets of pet foods were prepared, namely, combinations of the pet food of Examples 1 to 3 and Comparative Examples 1 to 3, with the pet food A serving as an object for comparing palatability. With respect to each set, ten cats were monitored and a test was carried out for two days. Hereinafter, a method of evaluating a first set, a combination of the pet food of Example 1 and the pet food A serving as an object for comparing palatability, is described.

On the first day, 20 g of each pet food was fed to one cat at the same time, one pet food fed from the left-hand side of the cat and the other pet food fed from the right-hand side of the cat, and the amount of the pet food eaten by the cat was measured after the cat ate the whole of one pet food or after 1 hour.

The amount of ingested pet food of Example 1 and the amount of ingested pet food A serving as an object for comparing palatability were acquired in terms of the percentage based on the total weight of the pet food eaten by one cat for the first day. The percentages obtained from ten cats being monitored were averaged and set as the result of the first day.

On the second day, 20 g of each pet food was fed to one cat at the same time, one pet food fed from the right-hand side of the cat and the other pet food fed from the left-hand side of the cat, and the amount of the pet food eaten by the cat was measured after the cat ate the whole of one pet food or after 1 hour.

The amount of ingested pet food of Example 1 and the amount of ingested pet food A serving as an object for comparing palatability were acquired in terms of the percentage based on the total weight of the pet food eaten by one cat for the second day. The percentages obtained from ten cats being monitored were averaged and set as the result of the second day.

Finally, the results of the first and second days were averaged, and the ratios (palatability) of the amounts of ingested pet food as the final results were acquired. It is indicated that a cat being monitored ate the pet food with a good appetite as the numeric value of the palatability is higher.

The pet food of Examples 2 and 3 and Comparative Examples 1 to 3 were evaluated in the same manner.

The numerical value of the palatability for the obtained pet food of Comparative Example 1 was set as 100 and values obtained by relativizing the numerical values of the palatability for pet food of Examples 2 and 3 and Comparative Examples 2 and 3 were calculated. The obtained results are listed in Table 4.

When the pet food of Comparative Example 2 was compared to the pet food of Example 1 which were produced from the raw ingredients having the same combination A, it was evident that the pet food of Example 1 which was produced by adding palm oil after beef tallow was added and whose outer surface was formed with a vegetable oil and fat layer has palatability higher than that of the pet food of Comparative Example 2 which was produced by adding beef tallow and palm oil at the same time and whose surface was not formed with a vegetable oil and fat layer.

The pet food of Example 1 whose outer surface was formed with a vegetable oil and fat layer smelled good because an odor peculiar to animal oils and fats was more reduced than the odor of the pet food of Comparative Example 2. From this result, there is a possibility that a reduction of the odor peculiar to the animal oils and fats because of formation of a vegetable oil and fat layer was operated to improve the palatability of a pet for the pet food.

Further, even when the entirety of the pet food of Comparative Examples 2 and 3 and Examples 1 to 3 was compared to each other, the pet food of Examples 1 to 3 had palatability higher than the palatability of the pet food of Comparative Examples 2 and 3 even though the pet food of Comparative Examples 2 and 3 and Examples 1 to 3 had the same amount of oils and fats to be added. Accordingly, it is evident that the presence or absence of the vegetable oil and fat layer contributes to the improvement of the palatability.

According to the comparison of Examples 2 and 3 to each other, when the addition amount of palm oil which is added in the vegetable oil and fat addition process and becomes a vegetable oil and fat layer is 4% by weight, it is understood that the effect of reducing the odor peculiar to animal oils and fats is sufficiently exhibited.

The ratios of beef tallow and palm oil were examined based on the results of the pet food of Examples 1 to 3 and Comparative Example 1 to 3 described above. The total addition amount of oils and fats obtained by summing the addition amount of beef tallow and palm oil was uniformly set as 13% by weight, the ratios of beef tallow and the palm oil were changed, and pet food of Comparative Examples 4 and 5 and Examples 4 to 6 was produced at blending ratios listed in Table 3. In addition, the above-described external additives were not added to the pet food of Examples 4 to 6 and Comparative Examples 4 and 5. Combinations of raw ingredients of used food grains, the amounts of added beef tallow, the amounts of added palm oil, and an impregnation method of beef tallow and palm oil are listed in Table 5.

**[Table 5]**

| | | | Comparative Example 4 | | Comparative Example 5 | | Example 4 | | Example 5 | | Example 6 | |
|---|---|---|---|---|---|---|---|---|---|---|---|---|
| | | | Combination D | | Combination D | | Combination D | | Combination D | | Combination D | |
| Amount of oils and fats to be added | Derived from raw ingredients | Meat (beef meal and the like) | 3.15% | | 3.15% | | 3.15% | | 3.15% | | 3.15% | |
| | | Extracts (chicken extract and the like) | 1.28% | | 1.28% | | 1.28% | | 1.28% | | 1.28% | |
| | | Cereals (corn, soybeans, and the like) | 0.45% | | 0.45% | | 0.45% | | 0.45% | | 0.45% | |
| | Animal oil and fat addition process | Beef tallow (vacuum coating method) | 13.0% | | 0% | | 3.9% | | 6.5% | | 10.0% | |
| | Vegetable oil and fat addition process | Palm oil (vacuum coating method) | 0% | | 13.0% | | 9.1% | | 6.5% | | 3.0% | |
| Content of oils and fats | Total content of oils and fats | | Animal | Vegetable | Animal | Vegetable | Animal | Vegetable | Animal | Vegetable | Animal | Vegetable |
| | | | 16.81% | 0.43% | 4.27% | 12.97% | 8.03% | 9.21% | 10.54% | 6.70% | 13.91% | 3.33% |
| | | | 17.24% | | 17.24% | | 17.24% | | 17.24% | | 17.24% | |
| | Animal oil and fat layer Vegetable oil and fat layer | | 12.53% | | 0.00% | | 3.76% | | 6.27% | | 9.64% | |
| | | | 0.00% | | 12.53% | | 8.77% | | 6.27% | | 2.89% | |
| Evaluation | Results of evaluation of palatability | (numerical value A: numerical value B) | | | 40:60 | | 44:56 | | 38:62 | | 55:45 | |
| | Change in amount of ingested pet food (g) | (first day and second day) | | | 42.0·33.2 | | 28.7-36.1 | | 31.6.31.9 | | 26.0-24.0 | |
| | Odor of animal oils and fats | | B | | A | | A | | A | | A | |

### [Examples 4 to 6]

Beef tallow was added to the food grains obtained in the granulation process at the ratio listed in Table 5 and the food grains were impregnated with beef tallow by the vacuum coating method (animal oil and fat addition process). Next, palm oil was added to the food grains and the food grains were impregnated with the palm oil by the vacuum coating method (vegetable oil and fat addition process). Other operations were performed in the same manner as in Example 1, thereby obtaining pet food of Examples 4 to 6.

### [Comparative Example 4]

Beef tallow and was added to the food grains obtained in the granulation process at the ratio listed in Table 5 and the food grains were impregnated with beef tallow by the vacuum coating method. Next, pet food was produced in the same manner as in Example 1 except that palm oil was not added to food grains (vegetable oil and fat addition process), thereby obtaining pet food of Comparative Example 4.

### [Comparative Example 5]

Pet food was produced in the same manner as in Example 1 except that beef tallow was not added (animal oil and fat addition process). Palm oil was added to the food grains obtained in the granulation process at the ratio listed in Table 5 and the food grains were naturally impregnated with the palm oil, thereby obtaining pet food of Comparative Example 5.

Odors of the obtained pet food of Examples 4 to 6 and Comparative Example 4 were evaluated in the same manner as described above. The obtained results are listed in Table 5.

### <Evaluation of palatability>

The palatability (biting properties) of the pet food of Examples 4 to 6 and Comparative Example 5 was evaluated according to the following method. A total of four sets of pet food obtained by combining the pet food of Comparative Example 4 with the pet food of Examples 4 to 6 and Comparative Example 5 were prepared. In respective sets, ten cats were monitored and a test was carried out for two days. Hereinafter, a method of evaluating a set of Comparative Example 4 with respect to Example 4 is described.

On the first day, 70 g of each pet food was fed to one cat at the same time, one pet food fed from the left-hand side of the cat and the other pet food fed from the right-hand side of the cat, and then the amount of pet food eaten by a cat was measured after one hour.

The amount of ingested pet food of Example 4 and the amount of ingested pet food of Comparative Example 4 were acquired in terms of the percentage based on the total weight of the pet food eaten by one cat for the first day. The percentages obtained from ten cats being monitored were averaged and set as the result of the first day.

On the second day, 70 g of each pet food was fed to one cat at the same time, one pet food fed from the left-hand side of the cat and the other pet food fed from the right-hand side of the cat, and then the amount of pet food eaten by a cat was measured after one hour.

The amount of ingested pet food of Example 4 and the amount of ingested pet food of Comparative Example 4 were acquired in terms of the percentage based on the total weight of the pet food eaten by one cat for the second day. The percentages obtained from ten cats being monitored were averaged and set as the result of the second day.

Finally, the results of the first and second days were averaged, and the ratios (palatability) of the amounts of ingested pet food as the final results were acquired. It is indicated that a cat being monitored ate the pet food with a good appetite as the numeric value of the palatability is higher. The ratios of the amounts of ingested pet food as the final results are listed in Table 5 based on the relationship of "(amount of ingested pet food of Comparative Example 4:amount of ingested pet food of Example 4) = (numerical value A: numerical value B)." The pet food of Examples 5 and 6 and Comparative Example 5 was evaluated in the same manner as described above.

In the change in the amounts of ingested pet food (g) (first day and second day) in Table 5, in the method of evaluating the palatability for two days described above, the average value of weights of pet food which was eaten by a cat for the first day as an object for evaluation (Examples 4 to 6 and Comparative Example 5) and the average value of weights of pet food which was eaten by a cat for the second day as an object for evaluation (Examples 4 to 6 and Comparative Example 5) were shown.

From the numerical values in the change of the amounts of ingested pet food, since the amounts of the ingested pet food of Examples 4 to 6 for the second day were maintained or increased when compared to the amounts thereof for the first day, it is understood that the pet food for the second day is excellent pet food in which a pet does not lose interest in eating. Meanwhile, the pet food of Comparative Example 5 has excellent palatability compared to that of the pet food of Comparative Example 4, but the amount of the ingested pet food of Comparative Example 5 is reduced on the second day relative to the first day when compared to the amount of the ingested pet food of Comparative Example 4. Accordingly, it is understood that the pet food of Comparative Example 5 is pet food in which a pet easily lose interest in eating.

From the results of Example 6, for the purpose of obtaining the effects of reducing the odor peculiar to animal oils and fats, it is sufficient that the addition amount of palm oil which is added in the vegetable oil and fat addition process and becomes a vegetable oil and fat layer is 3% by weight.

From the results of Example 4, it is understood that pet food having more excellent palatability compared to that of pet food of Comparative Example 4 can be obtained when the amount of beef tallow to be added in the animal oil and fat addition process is 3.9% by weight.

In addition, the pet food of Examples 4 to 6 which was impregnated with palm oil by the vacuum coating method was pet food whose surface was not sticky and was easily handled compared to the pet food of Examples 1 to 3 which was naturally impregnated with palm oil.

### <Pet food to which dietary fibers were added>

Examination was further performed for the purpose of improving the stickiness of the surface of the pet food. Combinations of raw ingredients of used food grains, the amounts of added beef tallow, the amounts of added palm oil, and an impregnation method of beef tallow and palm oil are listed in Table 6.

**[Table 6]**

| | | | Example 7 | | Example 8 | |
|---|---|---|---|---|---|---|
| | | | Combination E + dietary fibers | | Combination E | |
| Amount of oils and fats to be added | Derived from raw ingredients | Meat (beef meal and the like) | 3.15% | | 3.15% | |
| | | Extracts (chicken extract and the like) | 1.28% | | 1.28% | |
| | | Cereals (corn, soybeans, and the like) | 0.45% | | 0.45% | |
| | Animal oil and fat addition process | Beef tallow (vacuum coating method) | 9.0% | | 9.0% | |
| | Vegetable oil and fat addition process | Palm oil (vacuum coating method) | 4.0% | | 4.0% | |
| | | | Animal | Vegetable | Animal | Vegetable |
| | | | 12.95% | 4.29% | 12.95% | 4.29% |
| Content of oils and fats | Total content of oils and fats | | 17.24% | | 17.24% | |
| | Animal oil and fat layer | | 8.68% | | 8.68% | |
| | Vegetable oil and fat layer | | 3.86% | | 3.86% | |
| Evaluation | Results of evaluation of palatability | (relative value) | 117 | | 100 | |
| | Odor of animal oils and fats | | A | | A | |

In the granulation process, raw ingredients of food grains were mixed with each other at the blending ratio of the raw ingredients listed in Table 2 and pulverized using a grinder, thereby obtaining a mixture of a combination E. In addition, dietary fibers (ARBOCEL RC Fine, manufactured by Rettenmaier Japan Co., Ltd., 4% by weight) were added to the mixture of the combination E and then mixed with each other, and then a mixture of raw ingredients of food grains of the combination E to which dietary fibers were added was obtained.

### [Example 7]

The obtained mixture of the combination E to which the dietary fibers were added was granulated, subjected to a heat treatment and a drying treatment as described in the granulation process, thereby obtaining dry food grains of raw ingredients. Beef tallow (crude beef tallow, manufactured by Shikoku Yushi K. K.) was added to the obtained food grains at the amount listed in Table 6 (animal oil and fat addition process). As the impregnation method of the beef tallow, a vacuum coating method was used. Next, palm oil (refined palm oil T, manufactured by FUJI OIL CO., LTD.) in the amount listed in Table 6 was added to food grains with which beef tallow was impregnated (vegetable oil and fat addition process). As the impregnation of palm oil, the vacuum coating method was used. Subsequently, an external additive containing seasonings was added to the food grains impregnated with beef tallow and palm oil in order at the ratio listed in Table 2 and was adhered to the outer surface of the food grains, thereby obtaining pet food of Example 7 to which dietary fibers were added.

### [Example 8]

Pet food of Example 8 was produced in the same manner as in Example 7 except that a mixture of the combination E to which dietary fibers were not added was used, thereby obtaining pet food of Example 8.

### <Evaluation of odor>

Evaluation of the odor of obtained pet food of Examples 7 and 8 was performed in the same manner as described above.

### <Evaluation of palatability>

Evaluation of the palatability of the obtained pet food of Example 7 was performed by comparing with the pet food A serving as an object for comparing palatability, in the same manner as the method of evaluation performed on the pet food of Examples 1 to 3 and Comparative Examples 1 to 3. The pet food of Example 8 was evaluated in the same manner. The numerical value of the palatability for the obtained pet food of Example 8 was set as 100 and values obtained by relativizing the numerical values of the palatability for pet food of Example 7 were calculated. The obtained results are listed in Table 6.

The pet food of Example 7 to which dietary fibers were added was pet food whose surface was less sticky compared to the pet food of Example 8. Further, the pet food of Example 7 had palatability equivalent to that of the pet food of Example 8 and the odor peculiar to animal oils and fats was reduced.

Respective configurations and combinations thereof of the respective embodiments described above are merely examples and addition, omission, substitution, and other modifications of configurations are possible within the range not departing from the scope of the present invention. Further, the present invention is not limited by the respective embodiments and only limited by the range of claims.

### Industrial Applicability

The pet food of the present invention can be widely used in a field of animal food of pet animals.

### Reference Signs List

1: Pet food
2: Coating layer
10: Vegetable oil and fat layer
20: Animal oil and fat layer
30: Core
4: Food grains
6: Container for putting food grains

## Claims

1. Pet food comprising:
one or more kinds of animal oils and fats;
one or more kinds of vegetable oils and fats;
a core; and
a coating layer which covers the core,
wherein the coating layer includes a vegetable oil and fat layer on the outermost layer and an animal oil and fat layer which is formed between the core and the vegetable oil and fat layer.

2. The pet food according to claim 1, wherein the content of the vegetable oils and fats is 2.1 % by weight or greater.

3. The pet food according to claim 1 or 2, wherein the content of the animal fats and oils is in the range of 5.8% by weight to 23.0% by weight.

4. The pet food according to any one of claims 1 to 3, wherein the total content of the vegetable oils and fats and the animal oils and fats is in the range of 5.5% by weight to 24.8% by weight.

5. The pet food according to any one of claims 1 to 4, wherein the vegetable oils and fats are non-drying oil.

6. The pet food according to any one of claims 1 to 5, wherein the vegetable oils and fats are at least one selected from a group consisting of olive oil, cacao oil, palm oil, and palm kernel oil.

7. The pet food according to any one of claims 1 to 6, wherein the vegetable oils and fats are palm oil.

8. The pet food according to any one of claims 1 to 7, wherein the animal oils and fats are at least one selected from a group consisting of chicken oil, lard, beef tallow, and milk fats.

9. The pet food according to any one of claims 1 to 8, wherein the animal oils and fats are beef tallow.

10. A method of producing pet food comprising:
a process of granulating a mixture of raw ingredients;
a process of adding animal oils and fats to the granulated pet food and impregnating the pet food with the animal oils and fats; and
a process of adding vegetable oils and fats to the pet food and impregnating the pet food with the vegetable oils and fats after the process of adding the animal oils and fats and impregnating the pet food with the animal oils and fats.

11. The method of producing pet food according to claim 10, wherein the pet food is impregnated with the animal oils and fats by a vacuum coating method.

12. The method of producing pet food according to claim 10 or 11, wherein the pet food is impregnated with the vegetable oils and fats by the vacuum coating method.

13. The method of producing pet food according to any one of claims 10 to 12, wherein dietary fibers are added in the process of granulating the mixture of raw ingredients.
